# EUROPÄISCHE PATENTSCHRIFT

(11) **EP 3 482 802 B1**
(45) Veröffentlichungstag und Bekanntmachung des Hinweises auf die Patenterteilung: **13.01.2021**
(21) Anmeldenummer: 17201430.0
(22) Anmeldetag: 13.11.2017
(51) Int. Cl.: A63G 31/16, A63B 71/06, A63B 35/00, A63G 31/00, A63B 69/12

(54) **VORRICHTUNG ZUM ERLEBEN EINER VIRTUAL REALITY SIMULATION IN EINER UNTERWASSERWELT**
DEVICE FOR EXPERIENCING A VIRTUAL REALITY SIMULATION IN AN UNDERWATER WORLD
DISPOSITIF DESTINÉ À VIVRE UNE SIMULATION DE RÉALITÉ VIRTUELLE DANS UN MONDE SOUS-MARIN

(43) Veröffentlichungstag der Anmeldung: 15.05.2019
(73) Patentinhaber: VR Coaster GmbH & Co. KG, 67663 Kaiserslautern (DE)
(72) Erfinder: WAGNER, Miriam Corinna, 67691 Hochspeyer (DE)
(74) Vertreter: Westphal, Mussgnug & Partner Patentanwälte mbB

(56) Entgegenhaltungen:
- EP-A1- 3 188 482
- EP-A1- 3 213 800
- JP-A- 2005 007 114
- US-A- 5 271 106
- US-A- 5 685 722

## Beschreibung

Die vorliegende Erfindung betrifft eine Vorrichtung für einen Benutzer zum Erleben einer Virtual Reality Simulation, welche eine simulierte, erweiterte Unterwasserwelt visuell und sensorisch glaubhaft erlebbar macht.

Virtual Reality Simulationen sind aus dem Stand der Technik in unterschiedlichen Ausgestaltungen bekannt und werden beispielsweise dazu verwendet, eine virtuelle Realität während einer Fahrt mit einer Achterbahn auf einem von einem Fahrgast aufzusetzenden VR-Anzeigegerät bzw. einem Head-Mounted-Display abzubilden.

Aus der EP 3 188 482 A1 ist eine Vorrichtung zum Erzeugen und zum Darstellen einer Virtual Reality Simulationen mit einem VR-Anzeigegerät vorbekannt, wobei zum Darstellen der Virtual Reality Simulationen von außen auf eine Außenwand eines Wasservorkommen Inhalte projiziert werden. Ein Schwimmer oder ein Fahrgast trägt eine Brille mit einem Flüssigkristallverschluss, der wechselseitig in Abstimmung mit der Projektion das Sichtfeld des rechten oder linken Auges des Schwimmers versperrt, um den Eindruck einer stereographischen Darstellung zu erzeugen.

Dagegen wird bei einem Head-Mounted-Display das Bild der optischen Realität im aktuellen Sichtfeld des Fahrgastes mittels des Head-Mounted-Displays durch die stereoskopische Darstellung einer virtuellen Realität ersetzt. Dabei wird die Darstellung der virtuellen Realität in Abhängigkeit von Position und/oder Ausrichtung des Head-Mounted-Displays synchron zu der Kopfbewegung des Fahrgastes in Echtzeit angepasst. Auch kann die optische Realität von einer Kamera aufgenommen werden und in der Darstellung des Head-Mounted-Displays durch Einspielen von Augmented-Reality-Effekten erweitert werden.

Bei diesen bekannten Fahrgeschäften, bei dem der Fahrgast ein Head-Mounted-Display während der Fahrt trägt und auf dem eine mit der Fahrt synchronisierte virtuelle Realität der Fahrt bzw. der Achterbahnfahrt dem Fahrgast angezeigt wird, ist typischer Weise das Head-Mounted-Display mit einer Datenverarbeitungsanlage verbunden, die die Virtual Reality Simulation erzeugt.

Aus dem Stand der Technik sind Head-Mounted-Displays vorbekannt, die wasserverträglich sind, und für Unterwasseranwendungen eingesetzt werden. Derartige Virtual Reality Head-Mounted-Displays werden dazu verwendet, einem Benutzer eine simulierte Unterwasserwelt darzustellen. Das freie Umherschwimmen eines Benutzers innerhalb einer Unterwasserwelt, beispielsweise in einem Wasserbecken, bringt stets die Gefahr, dass der Benutzer mit den Wänden des Wasserbeckens kollidiert. Die Position des Virtual Reality Head-Mounted-Displays müsste kontinuierlich ermittelt werden, um die Position solcher Hindernisse der optischen Realität in der virtuellen Realität für den Benutzer sichtbar zu machen und somit einer Kollision vorzubeugen. Eine solche Positionsermittlung ist unter Wasser aufgrund der höheren Extinktion nur bedingt möglich. Darüber hinaus ist oftmals der Bewegungsfreiraum in einem solchen Wasserbecken begrenzt, weshalb selbst bei dem Einsatz einer Positionsermittlung ein Benutzer nur einen begrenzten Bewegungssfreiraum erfahren kann, wodurch das simulierte Erlebnis einer erweiterten Unterwasserwelt als nicht zufriedenstellend empfunden wird.

Es ist daher Aufgabe der vorliegenden Erfindung, eine Vorrichtung für einen Benutzer zum Erleben einer simulierten, erweiterten Unterwasserwelt zur Verfügung zu stellen, welche dem Benutzer mittels eines VR-Anzeigegerätes eine virtuelle Realität darstellt und gleichzeitig in Abhängigkeit von der virtuellen Realität das taktile Wahrnehmen von Wasserbewegungen, maßgeblich durch das Fühlen einer Strömung bzw. des Wasserwiderstandes und des Vortäuschens einer unbegrenzten Bewegungsfreiheit ein besonders aufregendes Ergebnis bietet. Dabei sollen möglichst sämtliche Sinne des Benutzers stimuliert werden um das Erlebnis so echt wie möglich zu gestalten, um einen möglichst hohen Grad an Immersion zu erreichen.

Diese Aufgaben werden durch eine Vorrichtung mit den Merkmalen des Patentanspruchs 1 gelöst. Vorteilhafte Weiterbildungen sind Gegenstand anhängiger Ansprüche.

Die erfindungsgemäße Vorrichtung für mindestens einen Benutzer umfasst wenigstens ein Wasservorkommen mit wenigstens einem Strömungserzeuger, der eingerichtet ist, eine Relativbewegung in dem Wasservorkommen zwischen dem Benutzer und dem in dem Wasservorkommen angeordneten Wasser herzustellen. Darüber hinaus umfasst die Vorrichtung wenigstens eine Datenverarbeitungsanlage und wenigstens ein VR-Anzeigegerät, wobei die Datenverarbeitungsanlage eine Virtual Reality Simulation erzeugt, die visuell auf dem VR-Anzeigegerät wiedergegeben wird. Der wenigstens eine Strömungserzeuger kann dabei entweder direkt von der wenigstens einen Datenverarbeitungsanlage in Abhängigkeit von der mindestens einen Virtual Reality Simulation gesteuert werden oder auch erfindungsgemäß eine zu der mindestens einen Virtual Reality Simulation synchronisierte Strömung erzeugen, wodurch simulationsabhängige Relativbewegungen zwischen dem Wasser des Wasservorkommens und dem mindestens einen Benutzer erzeugt werden. Durch die unterschiedlichen Relativbewegungen nimmt der mindestens eine Benutzer aufgrund des Wasserwiderstandes eine Bewegung in dem Wasservorkommen wahr, wodurch für ihn eine besonders glaubhafte Unterwasserwelt erlebbar ist. Die Datenverarbeitungsanlage und der Strömungserzeuger sind dabei derart betrieben, dass die auf dem VR-Anzeigegerät dargestellte Virtual Reality mit der Relativbewegung in dem Wasservorkommen abgestimmt ist.

Es ist dabei besonders vorteilhaft, wenn das Wasservorkommen ein Wasserbecken, ein See, ein Meer oder ein Fluss ist. Die erfindungsgemäße Vorrichtung kann somit vielseitig in jeglichen Gewässern zur Anwendung kommen unter der Bedingung, dass dieses eine ausreichende Größe aufweist. Eine ausreichende Größe ist immer dann gegeben, wenn der Benutzer ausreichend Bewegungsfreiheit in alle drei Raumrichtungen hat. Besonders bevorzugt sind Wasserbecken, insbesondere Schwimmbecken.

Gemäß einer weiteren vorteilhaften Ausgestaltung der Erfindung ist vorgesehen, dass der Strömungserzeuger eine Pumpe, eine Turbine, eine Seilwinde und/oder ein Wasserfahrzeug, insbesondere ein Unterwasserfahrzeug ist. Die Pumpe oder Wasser-Turbine sind eingerichtet, lokal in dem Wasservorkommen eine oder mehrere Strömungen zu erzeugen, währenddessen eine Seilwinde, ein Wasserfahrzeug und/oder ein Unterwasserfahrzeug den Benutzer durch das Wasservorkommen zieht. Eine Kombination unterschiedlicher Strömungserzeuger ist möglich.

Weiterhin ist es vorteilhaft, wenn wenigstens ein Eingabegerät für den mindestens einen Benutzer vorgesehen ist, welches mit der Datenverarbeitungsanlage verbunden ist. Der Benutzer kann mittels des Eingabegeräts Einfluss auf die Virtual Reality Simulation nehmen. Das Eingabegerät kann beispielsweise eine Taste zum Starten und Beenden der Virtual Reality Simulation oder einen Drehgriff aufweisen, welcher analog zu einem Gasdrehgriff eines Motorrads ausgebildet ist und die Geschwindigkeit, mit der sich der Benutzer durch die Virtual Reality-Welt bewegt, verändert.

Das Eingabegerät kann kabelgebunden oder kabellos mit der Datenverarbeitungsanlage verbunden sein. Insbesondere bevorzugt werden kabelgebundene Verbindungen, da aufgrund der höheren Extinktion der elektromagnetischen Wellen in Wasser die Reichweite der drahtlosen Übertragung beschränkt ist. Drahtlose Verbindungen können jedoch für kurze Reichweiten, beispielsweise als Bluetooth oder Wlan Verbindung ausgebildet sein.

Gemäß einer weiteren bevorzugten Ausgestaltung der vorliegenden Erfindung ist wenigstens eine Haltevorrichtung in dem Wasservorkommen vorgesehen, durch die der mindestens eine Benutzer relativ zu dem wenigsten einen Strömungserzeuger gehalten ist. Durch die Haltevorrichtung soll der Benutzer zu dem Strömungserzeuger ortsfest bleiben, so dass keine Gefahr besteht, dass dieser unkontrolliert abtreibt und gegen den Beckenrand des Wasserbeckens prallt.

Die Haltevorrichtung kann beispielsweise in Form eines Haifischschutzkäfigs ausgestaltet sein, der den Benutzer vor in der VR-Welt dargestellten Raubfischangriffen schützt.

Eine weitere mögliche Ausgestaltung der Haltevorrichtung ist eine Nachahmung eines Unterwasserscooters. An entsprechenden Griffpositionen des Unterwasserscooters können analog zu vollständig funktionstüchtigen Unterwasserscootern die Eingabegeräte vorgesehen sein, durch die ein sehr natürliches Erlebnis und eine intuitive Bedienung ermöglicht sind.

Weiterhin kann die Haltevorrichtung aus einem Gestänge und/oder aus Seilen ausgebildet sein, durch die der Benutzer gehalten wird.

Weiterhin ist es aber besonders vorteilhaft, wenn die Haltevorrichtung eine Bewegungseinrichtung aufweist, durch die die Haltevorrichtung beweglich ist. Die Bewegungseinrichtung kann beispielsweise einerseits dazu verwendet werden, die Haltevorrichtung, ausgebildet als Haifischschutzkäfig, zusammen mit dem Benutzer in das Wasservorkommen zu heben und andererseits kann die Bewegungseinrichtung oder eine weitere Bewegungseinrichtung Erschütterungen und Bewegungen an der Haltevorrichtung erzeugen. Eine in der VR-Welt simulierte Kollision mit einem Raubfisch kann durch eine durch die Bewegungseinrichtung erzeugte synchrone Erschütterung des Haifischschutzkäfigs spürbar gemacht werden.

Die Bewegungseinrichtung kann bevorzugt mittels Seilen die Haltevorrichtung in Position halten. Zum Ein- und Aussteigen können die Seile durch die Bewegungseinrichtung derart verstellt werden, dass die Haltevorrichtung auftaucht und der Benutzer von dort problemlos aus dem Wasser steigen kann. Besonders bevorzugt wird eine solche Bewegungseinrichtung in Verbindung mit einem Unterwasserscooter verwendet. Raubfischangriffe, Kollisionen oder dergleichen können ebenfalls mittels der Bewegungseinrichtung und dem Unterwasserscooter als Haltevorrichtung simuliert werden und Vibrationen und Bewegungen für den Benutzer taktil erlebbar sein.

Erfindungsgemäß ist darüber hinaus vorgesehen, dass die Haltevorrichtung das wenigstens eine Eingabegerät und/oder den mindestens einen Strömungserzeuger umfasst. Die Haltevorrichtung kann somit einerseits eine für den Benutzer spürbare Strömung erzeugen und andererseits kann der Benutzer mittels der Haltevorrichtung Einfluss auf die Geschwindigkeit der VR-Welt nehmen. Bei einer Integration des Strömungserzeugers in die Haltevorrichtung ist der Abstand zwischen dem Benutzer und dem Strömungserzeuger auf das Geringstmögliche reduziert. Dadurch kann die Menge des durch den Strömungserzeuger bewegten Wassermassenstroms reduziert werden und andererseits ist eine Änderung der erzeugten Strömung innerhalb einer geringfügigen Verzögerung durch den Benutzer spürbar.

Darüber hinaus kann die Haltevorrichtung eine Sensorik aufweisen, durch die beispielsweise der Strömungswiderstand oder der Vortrieb des Benutzers erfasst wird.

Der Benutzer kann beispielsweise durch Erzeugung eines eigenen Vortriebes eine Kraft auf die Haltevorrichtung ausüben. Diese Vortriebskraft des Benutzers wird erfasst und die Bewegungsgeschwindigkeit in der VR-Welt, sowie die durch den Strömungserzeuger erzeugte Strömung verstärkt und umgekehrt. Dadurch kann der Benutzer durch Schwimmbewegungen bzw. Tauchbewegungen die Geschwindigkeit durch die VR-Welt vorgeben. Die Sensorik kann darüber hinaus auch Lenkbewegungen des Benutzers an der Haltevorrichtung erfassen und somit Einfluss auf das VR-Erlebnis nehmen.

Darüber hinaus kann besonders bevorzugt die Sensorik Druck oder Temperatur in der Strömung erfassen. Die Sensorik kann insbesondere die Strömungsgeschwindigkeit und die Strömungsrichtung erfassen, so dass auch in Abhängigkeit von der durch den Strömungserzeuger erzeugten Strömung die Virtual Reality Simulation erzeugt werden kann.

Das VR-Anzeigegerät ist ein wasserverträgliches Head-Mounted-Display. Das Head-Mounted-Display kann weiter bevorzugt die Position und/oder die Ausrichtung synchron zu der Kopfbewegung des Benutzers erfassen. Das Head-Mounted-Display ersetzt die optische Realität im aktuellen Sichtfeld des Benutzers durch eine stereoskopische Darstellung einer virtuellen Realität. In einer weiteren bevorzugten Ausgestaltung des VR-Anzeigegeräts ist dieses mit mindestens einer Kamera versehen, die die virtuelle Realität erfasst.

Darüber hinaus kann das Head-Mounted-Display eine Kamera aufweisen, durch welche die optische Realität aufgenommen wird und in der Darstellung des Head-Mounted-Displays durch einspielen von Augmented-Reality Effekten erweitert wird.

Das VR-Anzeigegerät kann dabei kabelgebunden oder kabellos mit der Datenverarbeitungsanlage verbunden sein.

Gemäß einer weiteren bevorzugten Ausführung der vorliegenden Erfindung weist der Strömungserzeuger eine Warm- und/oder Kaltwasserzumischung auf. Durch das Beimischen von warmem und kaltem Wasser können unterschiedliche Wasserschichten simuliert werden. Alternativ zu der Warm- und/oder Kaltwasserzumischung können entsprechende Kühler/Heizer vorgesehen sein.

Weiterhin ist es besonders vorteilhaft, wenn mindestens zwei Strömungserzeuger vorgesehen sind, die eine Wasserströmung in unterschiedliche Strömungsrichtungen und/oder Geschwindigkeiten erzeugen können. Dadurch können insbesondere Scherströmungen wie Strudel oder dergleichen simuliert werden.

Weiterhin ist es besonders vorteilhaft, wenn der wenigstens eine Strömungserzeuger eine Strömungsvektorsteuerung aufweist, durch die der Richtungsvektor der Strömung relativ zu dem Benutzer geändert werden kann.

Gemäß einer weiteren bevorzugten Ausgestaltung der vorliegenden Erfindung ist in dem Wasservorkommen mindestens eine Schallquelle angeordnet, die in Abhängigkeit von der Virtual Reality Simulation Geräusche wiedergeben kann. Durch die Schallquelle können Geräusche aus der VR-Welt wiedergegeben werden, wie beispielsweise vorbeifahrende Motorboote, Beißgeräusche der Raubfische an dem Haifischschutzkäfig, oder dergleichen.

In einer weiteren bevorzugten Ausführung der vorliegenden Erfindung ist wenigstens ein Luftblasenerzeuger vorgesehen, der in Abhängigkeit von der Virtual Reality Simulation betrieben ist. Der Luftblasenerzeuger erzeugt eine oder mehrere unterschiedlich große Luftblasen, die mit dem Benutzer bei Kontakt interagieren. Die Luftblasen verändern lokal den Auftrieb des menschlichen Körpers, so dass auf diese Art und Weise mit den Luftblasen eine spürbare Kraft auf den Benutzer ausgeübt wird. Auch können die Luftblasen beheizte oder gekühlte Luft beinhalten, welche ein besonderes sensorisches Erlebnis erzeugen.

Weiter bevorzugt kann mindestens eine Positionserfassungseinrichtung vorgesehen werden, durch die die Position des mindestens einen Benutzers erfasst ist. Die Positionserfassungseinrichtung kann dabei nicht nur die Position des Benutzers erfassen, sondern beispielsweise auch dessen Gestik und/oder Körperhaltung. Benutzen mehrere Benutzer die Vorrichtung gleichzeitig, können die Benutzer in der virtuellen Realität miteinander interagieren, und somit gemeinsam die VR-Welt erkunden und mittels Gesten auch in der VR-Welt interagieren.

Eine weitere vorteilhafte Weiterbildung der vorliegenden Erfindung sieht vor, dass eine Zuführungseinrichtung vorgesehen ist, durch die mindestens ein Gegenstand in das Wasservorkommen zugeführt werden kann. Derartige Gegenstände sind beispielsweise Schwimm- bzw. Tauchkörper wie Bälle, Gummifische oder dergleichen. Die Gegenstände können mit einer Oberflächenbeschichtung versehen sein, die eine der Haut eines Fisches angepasste Oberflächenhaptik aufweist. Die Gegenstände können darüber hinaus in der VR-Welt dargestellt werden. Der oder die Gegenstände können auch von einem Operator imitiert werden, der hierzu einen Taucheranzug mit entsprechender Oberflächenhaptik anzieht.

Auch können Gegenstände in dem Wasservorkommen mittels einer Stelleinheit bewegbar angeordnet sein. Die Gegenstände können durch die Stelleinheit kontrolliert zu bzw. an den Benutzer herangeführt werden und mit diesem physisch aber auch in der VR-Welt interagieren.

Die Gegenstände können Wasserlebewesen, Wasserpflanzen oder sonstige Unterwassergegenstände wie Steine, Felsen, Wrackteile imitieren, oder Nachbildungen realer Gegenstände sein.

Darüber hinaus ist es besonders vorteilhaft, wenn die Datenverarbeitungsanlage eine Vielzahl von Virtual Reality Simulationen mit unterschiedlichen Erlebnissen beinhaltet. Der Benutzer kann gezielt ein Erlebnis oder mehrere Erlebnisse hintereinander erleben, auch können gezielt über eine Benutzerschnittstelle bestimmte Vorlieben oder Abneigungen bei der Ausgestaltung des Erlebnisses berücksichtigt werden.

Vorteilhafterweise können mehrere Benutzer der Vorrichtung eine individuelle Virtual Reality Simulation erleben.

Die Erfindung wird nachfolgend anhand von Ausführungsbeispielen unter Bezugnahme auf die beigefügten Figuren ausführlich beschrieben. Es zeigen:
- Figur 1: eine schematische Darstellung einer erfindungsgemäßen Vorrichtung bestehend aus einem Strömungserzeuger, der in einem Wasservorkommen eine Strömung erzeugt, in der sich ein Benutzer befindet, der mittels eines VR-Anzeigegerätes eine VR-Welt dargestellt bekommt,
- Figur 2: ein zweites erfindungsgemäßes Ausführungsbeispiel der vorliegenden Erfindung, wobei der Benutzer durch eine gurtförmige Haltevorrichtung in einer Position ortsfest zu dem Strömungserzeuger gehalten wird,
- Figur 3: ein drittes erfindungsgemäßes Ausführungsbeispiel mit einer Haltevorrichtung, die als Tauchscooter ausgestaltet ist und einen Strömungserzeuger aufweist,
- Figur 4: ein viertes erfindungsgemäßes Ausführungsbeispiel einer erfindungsgemäßen Vorrichtung mit einer Vielzahl von Strömungserzeugern und Haltevorrichtungen, die einer Vielzahl von Benutzern ein VR-Unterwassererlebnis ermöglichen, und
- Figur 5: ein fünftes erfindungsgemäßes Ausführungsbeispiel mit einer Haltevorrichtung, die als Haifischschutzkäfig ausgebildet ist, zwei Strömungserzeugern und einem Gegenstand, der durch eine Bewegungseinrichtung in dem Wasservorkommen beweglich ist und der mit dem Benutzer interagieren kann.

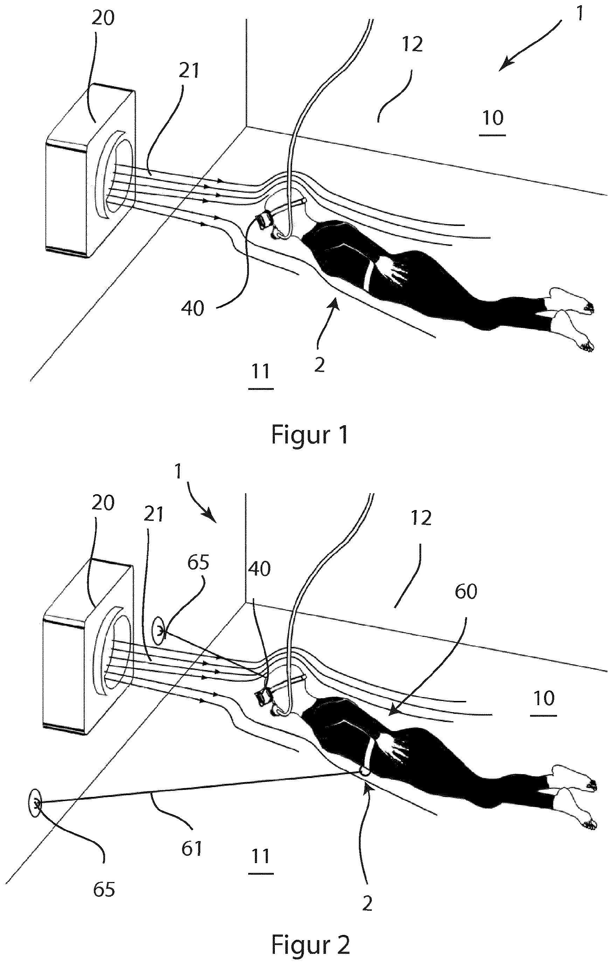

Nachfolgend wird unter Bezugnahme auf die Figuren 1 bis 5 verschiedene Ausführungsbeispiele der Erfindung im Detail beschrieben. Gleiche bzw. funktional gleiche Teile sind mit den gleichen Bezugszeichen bezeichnet.

Figur 1 zeigt in einer stark schematisierten Darstellung eine erfindungsgemäße Vorrichtung 1, die es einem Benutzer 2 ermöglicht, eine simulierte erweiterte Unterwasserwelt besonders glaubhaft erleben zu können.

Die Vorrichtung 1 umfasst eine (nicht dargestellte) Datenverarbeitungsanlage, die die Virtual Reality Simulation anhand eines Computerprogramms berechnet bzw. erzeugt. Dieses vorrichtungsspezifische Computerprogramm dient dazu, eine virtuelle Realität einer Unterwasserwelt während eines Tauchgangs zu simulieren, wobei die virtuelle Realität dem Benutzer auf einem VR-Anzeigegerät 40 dargestellt wird und durch weitere technische Hilfsmittel, wie nachfolgend näher erläutert wird, besonders glaubhaft erlebbar imitiert wird.

Ferner umfasst die Vorrichtung 1 ein Wasservorkommen 10, das mit Wasser gefüllt ist. Im vorliegenden Ausführungsbeispiel ist das Wasservorkommen 10 ein Wasserbecken 11, welches ausreichend groß bemessen ist, dass der Benutzer 2 sich in alle drei Raumrichtungen frei bewegen kann, ohne dass er mit den Wänden 12 des Wasserbeckens 11 kollidiert. Das Wasser in dem Wasservorkommen 10 ist vorzugsweise Süßwasser, wobei ohne weiteres auch Salzwasser verwendet werden kann.

An einer Wand 12 des Wasserbeckens 11 ist ein Strömungserzeuger 20 angeordnet, der eingerichtet ist, eine Strömung 21 zu erzeugen. Die Strömung 21 durchströmt als Freistrahl das Wasservorkommen 10 und ist eingerichtet den Benutzer zu umströmen. Der Strömungserzeuger 20 ist analog einer Gegenstromanlage ausgebildet, wobei der Betriebspunkt durch die Datenverarbeitungsanlage in Abhängigkeit von der Virtual Reality Simulation eingestellt ist und somit dynamisch variierbar ist. Eine entsprechende Pumpe oder Wasserturbine bezieht hierzu aus einem Wasserkreislauf oder aus einer Frischwasserzufuhr der Vorrichtung 1 das benötigte Wasser. Einer Pumpe können dabei mehrere Strömungserzeuger 20 zugeordnet sein.

Alternativ kann der Strömungserzeuger 20 anhand eines Programms mit einer vorgegebenen Strömungsabfolge vordefinierte Strömungsbedingungen erzeugen. Die Strömungsabfolge wird zusammen mit der Virtual Reality Simulation gestartet und der Anwendung in dem VR-Anzeigegerät 40 wird mitgeteilt, dass die Animation starten soll. In dieser alternativen Ausgestaltung wird die von der Datenverarbeitungsanlage erzeugte Virtual Reality Simulation synchron zu der Strömung 21 erzeugt. Auch kann durch Erfassung von Strömungsgrößen die Datenverarbeitungsanlage die Virtual Reality Simulation in Abhängigkeit von den Strömungserzeugern 20 erzeugen bzw. synchronisiert erzeugen.

In der Strömung 21 des Strömungserzeugers 20 taucht der Benutzer 2 und versucht durch Vortriebsbewegungen gegen die Strömung anzukommen. Um eine Kollision mit den Wänden 12 zu verhindern, ist eine Positionserfassungseinrichtung vorgesehen, die die Position des Benutzers 2 in dem Wasservorkommen 10 erfasst. Die Positionserfassungseinrichtung überwacht die Position des Benutzers 2 indem der Strömungserzeuger 20 positionsabhängig gesteuert wird, wodurch der Benutzer ortsfest gehalten ist. Erzeugt der Benutzer 2 mehr Vortrieb, bewegt er sich in Richtung des Strömungserzeugers 20. Die Positionserfassungseinrichtung erkennt dies und erhöht die Strömungsgeschwindigkeit der Strömung 21, so dass der Benutzer auf die ursprüngliche Position zurückkehrt. Umgekehrt verhält es sich damit, wenn der Benutzer 2 einen geringeren Vortrieb erzeugt. Die Strömungsgeschwindigkeit der Strömung 21 in dem Wasservorkommen 10 entspricht dabei der Geschwindigkeit, mit der sich der Benutzer 2 durch eine von der Virtual Reality Simulation erzeugten virtuellen Welt bzw. VR-Welt bewegt. Eine Skalierung der Geschwindigkeiten kann ebenso vorgesehen sein. Die VR-Welt kann beispielsweise einen Tauchgang durch ein Riff darstellen.

Der Benutzer 2 bestimmt somit durch seinen eigenen Bewegungsablauf mit welcher Geschwindigkeit er sich durch die VR-Welt bewegt. Auch kann der Benutzer 2 durch entsprechende Änderungen in der Fortbewegungsrichtung Einfluss auf das VR-Erlebnis nehmen.

Während des Tauchganges ist der Benutzer 2 durch eine geeignete Vorrichtung mit Sauerstoff zum Atmen versorgt, wobei der Strang zur Versorgung mit Atemluft ebenfalls für die Datenübertragung von dem VR-Anzeigegerät 40 genutzt werden kann.

Das VR-Anzeigegerät 40 kann darüber hinaus ohne weiteres kabellos mit der Datenverarbeitungsanlage verbunden sein, wobei aufgrund der höheren Extinktion der elektromagnetischen Wellen im Wasser eine drahtlose Übertragung nur über kurze Entfernungen möglich ist. Für die drahtlose Übertragung der Daten zwischen der Datenverarbeitungsanlage und dem VR-Anzeigegerät 40 werden bevorzugt möglichst langwellige Frequenzen verwendet. Eine Datenübertragung via gängiger Standartfrequenzen in ISM-Bändern kann unter Berücksichtigung vorgenannter Einschränkungen ebenfalls genutzt werden.

Aus dem gekoppelten Zusammenspiel zwischen der Strömungsgeschwindigkeit und der durch das VR-Anzeigegerät 40 dargestellten VR-Welt wird ein besonders hoher Grad der Immersion erreicht. Der Benutzer 2 bekommt einerseits ein hochqualitatives Erlebnis visuell dargestellt und nimmt gleichzeitig die Bewegung unter Wasser maßgeblich durch das Fühlen der Strömungen wahr, so dass das Bewusstsein des Benutzers illusorischen Stimuli ausgesetzt ist, die die reale Welt in den Hintergrund treten lassen, so dass die VR-Welt nunmehr als real empfunden wird.

Das Erlebnis des Benutzers 2 kann darüber hinaus durch weitere Sinnesstimulationen und Eindrücke an Dramaturgie gesteigert werden. Der Strömung 21 können zusätzlich Gegenstände 26 zugeführt werden, die mit der Strömung 21 gegen den Benutzer gespült werden. In der VR-Welt können diese Gegenstände 26 Wasserlebewesen darstellen und das VR-Erlebnis noch lebendiger gestalten. Die Gegenstände 26 sind bevorzugt gummielastische Volumenkörper, insbesondere Bälle, deren Dichte geringfügig kleiner ist als die Dichte des Wassers in dem Wasservorkommen 10. Dadurch schwimmen die Gegenstände 26 in der Strömung 21 nicht direkt auf, sondern folgen dieser, interagieren mit dem Benutzer 2 und schwimmen erst anschließend langsam auf. Die Oberflächen der Gegenstände 26 sind jeweils den in der VR-Welt dargestellten Tieren nachempfunden.

Ergänzend hierzu kann eine oder mehrere Schallquellen in dem Wasservorkommen 10 angeordnet sein, durch die beispielsweise typische Meeresgeräusche abgespielt werden können. Durch eine entsprechende Anordnung der Schallquellen kann in Verbindung mit einer visuellen Darstellung durch das VR-Anzeigegerät 40 ein dichtes Vorbeifahren eines Motorbootes simuliert werden.

Auch können in dem Wasservorkommen 10 Luftblasenerzeuger angeordnet sein, die gezielt Luftblasen ausstoßen, welche mit dem Benutzer 2 interagieren.

Das Vordringen in unterschiedliche Wasserschichten, insbesondere das Tauchen in tiefere Gewässer, kann durch eine Beimischung von kaltem Wasser imitiert werden. Der menschliche Körper hat im Gesichtsbereich und an den Händen besonders viele empfindliche Thermorezeptoren, die bereits kleine Temperaturschwankungen fühlen können. Somit reichen geringfügige Temperaturänderungen von ca. >0,25 °C.

Das zweite erfindungsgemäße Ausführungsbeispiel, dargestellt Figur 2, unterscheidet sich in der Art der Positionierung des Benutzers 2 vor dem Strömungserzeuger 20. Die Positionierung des Benutzers 2 ist dahingehend erleichtert, dass dieser nicht durch seine eigene Körperkraft die Positionierung in der Strömung 21 erwirken muss, sondern eine Haltevorrichtung 60 diese Aufgabe übernimmt. Die Haltevorrichtung 60 umgreift den Benutzer 2 mit einem Gurt und hält ihn mittels Seilen 61 ortsfest in einer vorgegebenen Position vor dem Strömungserzeuger 20. Der Gurt ist vorzugsweise in der Hüftgegend bzw. am Körperschwerpunkt angeordnet und bewahrt den Benutzer vor einem Davontreiben. Durch die Haltevorrichtung 60 kann somit ein anhaltendes Strömungserlebnis ermöglicht werden, ohne dass der Benutzer sich irgendwo festhalten muss.

Die Haltevorrichtung 60 besteht ferner aus einer Bewegungseinrichtung 65, durch die der Benutzer 2 relativ zu dem Strömungserzeuger 20 bewegt werden kann. Eine solche Bewegung ist beispielsweise bei jedem Beginn und jedem Ende des virtuellen Erlebnisses notwendig, um den Benutzer 2 von dem Beckenrand in die entsprechende Position vor den Strömungserzeuger 20 zu bewegen.

Die Datenverarbeitungsanlage steuert den Strömungserzeuger 20, die Bewegungseinrichtung 65 und erzeugt die Virtual Reality Simulation, die auf dem VR-Anzeigegerät 40 dargestellt wird.

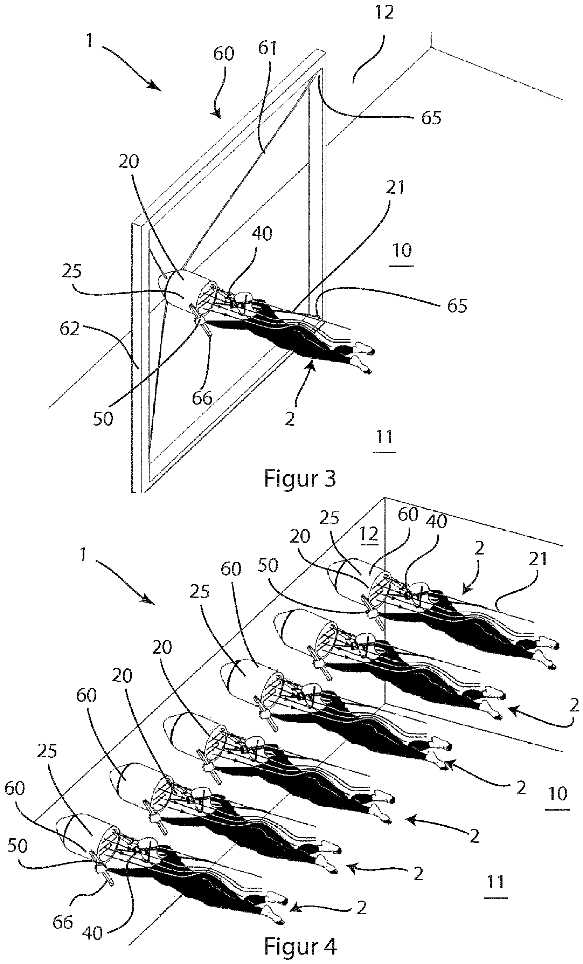

Ein drittes erfindungsgemäßes Ausführungsbeispiel ist der Figur 3 zu entnehmen, wobei gleiche bzw. funktional gleiche Teile mit den gleichen Bezugszeichen wie in den vorherigen Ausführungsbeispielen bezeichnet sind. Die Vorrichtung 1 beinhaltet für jeden Benutzer 2 einen Strömungserzeuger 20, eine Haltevorrichtung 60 bzw. einen Unterwasserscooter 25 und ein VR-Anzeigegerät 40. Die Strömung 21 kann auch von einem gemeinsamen Strömungserzeuger 20 für alle Benutzer 2 erzeugt werden.

Die Haltevorrichtung 60 ist einem Unterwasserscooter 25 nachempfunden und mittels Seilen 61 an einem Gestell 62 gehalten. Die Haltevorrichtung 60 weist analog zu dem in Figur 2 vorgestellten Ausführungsbeispiel Bewegungseinrichtungen 65 auf, wobei jedes der Seile 61 mit einer Bewegung zur Bewegungseinrichtung 65 zugestellt werden kann.

Die Haltevorrichtung 60 bzw. der Unterwasserscooter 25 kann durch die Bewegungseinrichtung 65 zu Beginn einer Fahrt und nach Abschluss einer Fahrt an den Beckenrand gefahren werden, damit der Benutzer 2 auf- bzw. absteigen kann. Die Haltevorrichtung 60 umfasst zwei bügelartige Griffe 66 an denen sich der Benutzer 2 festhalten kann und die von der Haltevorrichtung 60 abstehen. An den Griffen 66 ist mindestens ein Eingabegerät 50 vorgesehen, durch das der Benutzer 2 die Fahrt bzw. das Erlebnis beginnen und beenden kann.

Darüber hinaus ist an dem Griff 66 ein zweites Eingabegerät 50 vorgesehen, dass als Gasdrehgriff ausgebildet ist und durch den der Benutzer 2 die Geschwindigkeit mit der er sich durch die VR-Welt schwebt einstellen kann. Der Gasdrehgriff ist dabei einem Gasdrehgriff an einem Lenker eines Motorrades nachempfunden.

In der Haltevorrichtung 60 ist ein Strömungserzeuger 20 angeordnet. Der Strömungserzeuger 20 erzeugt eine Strömung 21, die auf der dem Benutzer 2 zugewandten Seite der Haltvorrichtung 60 austritt und den Benutzer 2 umströmt. Die Haltevorrichtung 60 bzw. der Unterwasserscooter 25 ist vorzugsweise zylinderförmig bzw. torpedoförmig ausgebildet und der Strömungserzeuger 20 im inneren der Haltevorrichtung 60 angeordnet. Die Spannungsversorgung sowie die Datenverbindungen zu der Datenverarbeitungsanlage können kabelgebunden entlang der Seile 61 erfolgen.

Darüber hinaus können noch weitere Störungserzeuger 20 in dem Wasservorkommen 10 angeordnet sein, so dass einerseits für den Benutzer 2 eine Tauchgeschwindigkeit und andererseits ein Nachlauf des Unterwasserscooters 25 bzw. des Strömungserzeugers 20 in dem Unterwasserscooter 25 spürbar ist.

Die Haltevorrichtung 60 kann auch eine Sensorik aufweisen, durch die die Krafteinwirkung des Benutzers 2 auf die Haltevorrichtung 60 erfasst ist. Der Benutzer 2 kann durch Lenkbewegungen an der Haltevorrichtung 60 die Fahrtrichtung in der VR-Welt beeinflussen. Die Sensorik erfasst die Lenkbewegungen des Benutzers 2, wodurch die entsprechenden Richtungsänderungen in der VR-Welt erfolgen.

Die Seile 61 der Haltevorrichtung 60 können zusätzlich eine Spannungsversorgung und/oder Datenverbindung zwischen der Haltevorrichtung 60 bzw. dem Unterwasserscooter 25, dem Strömungserzeuger 20, der Sensorik und dem VR-Anzeigegerät 40 mit der Datenverarbeitungsanlage herstellen.

Die Sensorik kann ebenfalls mittels geeigneter Messtechnik die Strömung 21 messtechnisch erfassen. Druck-/Temperatursensoren können vorgesehen sein, die Strömung 21, insbesondere Strömungsgeschwindigkeit und Strömungsrichtung, zu erfassen. Durch den oder die von der Sensorik erfassten Messwerte, kann in Abhängigkeit von der tatsächlich vorliegenden Strömungsgeschwindigkeit die Virtual Reality Simulation von der Datenverarbeitungsanlage erzeugt werden.

Die Positionserfassungseinrichtung beobachtet den Benutzer 2 während des Erlebnisses. Durch die Positionserfassungseinrichtung können beispielsweise hektische Bewegungen oder ein unruhiges Verhalten des Benutzers 2 erfasst werden. Hektische Fußbewegungen oder Handbewegungen können beispielsweise Sedimente in der VR-Welt aufwirbeln, oder Wasserlebewesen aufschrecken.

Figur 4 ist die Vorrichtung 1 mit einer Vielzahl von Haltevorrichtungen für mehrere Benutzer 2 zu entnehmen. Die Haltevorrichtungen 60 sind fest an der Wand 12 des Wasserbeckens 11 angeordnet und nach Art eines Unterwasserscooters 25 ausgebildet. Jeder der Benutzer 2 verfügt über ein eigenes VR-Anzeigegerät 40, wobei jeder Benutzer 2 entweder ein individuelles Erlebnis erleben kann, oder die Benutzer 2 ein gemeinsames Erlebnis in der VR-Welt erleben können. Jeder Haltevorrichtung 60 ist ein Strömungserzeuger 20 zugeordnet, so dass jeder Benutzer 2 auch in der gemeinsamen VR-Welt das Erlebnis individuell durch entsprechende Eingaben mittels des Eingabegeräts 50 oder der Sensorik beeinflussen kann.

Die Positionserfassungseinrichtung kann dabei jeden einzelnen Benutzer 2 erfassen und ihn entsprechend in der VR-Welt der übrigen Benutzer 2 darstellen, so dass beispielsweise eine Verständigung mittels Gesten zwischen den einzelnen Benutzern in der VR-Welt während des Erlebnisses möglich ist.

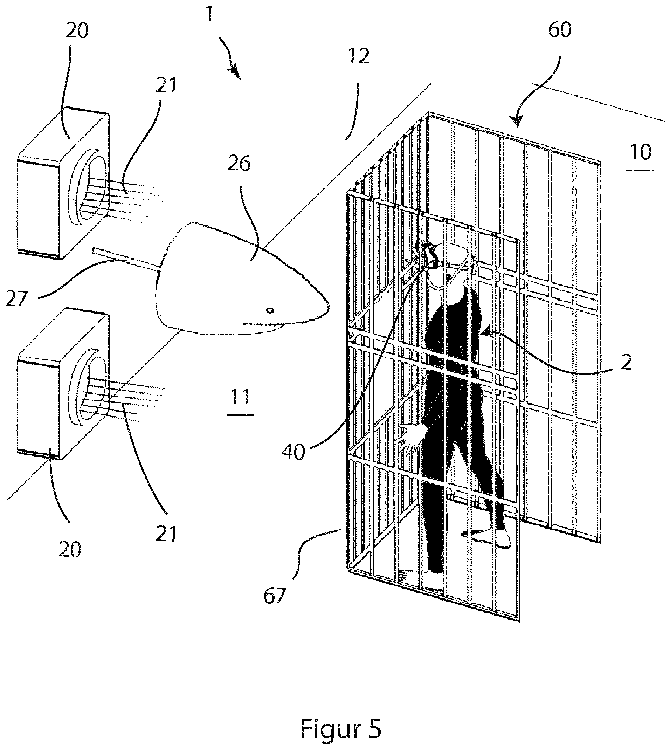

In Figur 5 ist ein fünftes Ausführungsbeispiel abgebildet. Die Haltevorrichtung 60 ist als Haifischschutzkäfig 67 ausgebildet, in dem sich der Benutzer 2 befindet.

Die Vorrichtung 1 gemäß dieses Ausführungsbeispiels ermöglicht ein besonders aufregendes VR-Erlebnis, nämlich dem Käfigtauchen mit Haien. Die Vorrichtung 1 ist dabei besonders Kompakt und mobil und kann dadurch an verschiedenen Stellen eingesetzt werden, wie zum Beispiel einen mobilen Fahrgeschäft.

Dieses VR-Erlebnis kann bereits vor dem tatsächlichen eintauchen des Benutzers in das Wasservorkommen 10 beginnen. Die Bewegungseinrichtung 65 ist beispielsweise als ein Kran ausgebildet, der den Haifischschutzkäfig 67 von einem Boot in das Wasservorkommen 10 an eine vordefinierte Position vor die Strömungserzeuger 20 bewegt.

In der Unterwasserwelt wird eine Strömung durch die beiden Strömungserzeuger 20 simuliert. Darüber hinaus ist in dem Wasservorkommen 10 ein Gegenstand 26 mittels einer Stelleinheit 27 beweglich gehalten. Der Gegenstand 26 kann durch die Stelleinheit 27 relativ zu der Haltevorrichtung 60 bewegt werden.

Die Bewegungen des Gegenstands 26 werden dem Benutzer 2 entsprechend der durch die Datenverarbeitungsanlage erzeugten Virtual Reality Simulation in der VR-Welt durch das VR-Anzeigegerät 40 dargestellt, während dessen der Benutzer 2 durch unterschiedlichen Strömungswiderstand das Vorbeischwimmen des Gegenstandes 26 spürt. Auch kann der Gegenstand 26 simuliert mit der Haltevorrichtung 60 kollidieren, um so einen Raubfischangriff zu simulieren. Synchron dazu kann die Bewegungseinrichtung 65 die Haltevorrichtung 60 in eine entsprechende Erschütterung und/oder Vibration versetzen und die Schallquelle eine entsprechende Geräuschkulisse erzeugen. Dieses haptische Erleben wird visuell in dem VR-Anzeigegerät 40 bzw. in der VR-Welt dargestellt.

Zur erweiterten Simulation insbesondere von Scherströmungen, Flossenschlägen der Wasserbewohner usw. können die Strömungserzeuger eine Vektorsteuerung aufweisen, durch die der Strömungsvektor beliebig eingestellt werden kann. Das Geschehen in der VR-Anwendung 40 kann somit durch individuelle oder synchronisierte Ansteuerung eines oder mehrerer Strömungserzeuger 20 simuliert werden.

Die erfindungsgemäße technische Lehre ist nicht auf die einzelnen Ausführungsformen in den konkreten Ausführungsbeispielen begrenzt. Vielmehr sind Kombinationen der einzelnen Ausführungsbeispiele möglich.

Somit kann erfindungsgemäß eine Vorrichtung 1 zum Erleben einer Virtual Reality Simulation in einer Unterwasserwelt 1 bereitgestellt werden, die auf eine vielseitige Weise eine größtmögliche Anzahl an Sinneseindrücken erzeugt, die dem Benutzer 2 ein glaubhaftes simuliertes Erlebnis in der Unterwasserwelt ermöglicht.

### Bezugszeichenliste

- 1: Vorrichtung
- 2: Benutzer
- 10: Wasservorkommen
- 11: Wasserbecken
- 12: Wand von 11
- 20: Strömungserzeuger
- 25: Unterwasserscooter
- 26: Gegenstand
- 27: Stelleinheit
- 40: VR-Anzeigegerät
- 50: Eingabegerät
- 60: Haltevorrichtung
- 61: Seil
- 62: Gestell
- 65: Bewegungseinrichtung
- 66: Griff
- 67: Haifischschutzkäfig

## Patentansprüche

1. Vorrichtung (1) für mindestens einen Benutzer (2) zum Erleben mindestens einer Virtual Reality Simulation in einer Unterwasserwelt, umfassend:
- wenigstens ein Wasservorkommen (10) mit wenigstens einem Strömungserzeuger (20),
- wenigstens eine Datenverarbeitungsanlage, und
- wenigstens ein VR-Anzeigegerät (40),
- wobei die wenigstens eine Datenverarbeitungsanlage die mindestens eine Virtual Reality Simulation erzeugt,
- wobei der wenigstens eine Strömungserzeuger (20), und die wenigstens eine Datenverarbeitungsanlage zur Virtual Reality Simulation synchronisiert sind und eine zu der mindestens einen Virtual Reality Simulation synchronisierte Strömung erzeugt wird, wodurch simulationsabhängige Relativbewegungen zwischen dem Wasser des Wasservorkommens und dem mindestens einen Benutzer erzeugt werden,
- wobei die Virtual Reality Simulation auf dem VR-Anzeigegerät (40) wiedergegeben wird, und
- wobei das VR-Anzeigegerät (40) ein wasserverträgliches Head-Mounted-Display ist, und dass das mindestens eine VR-Anzeigegerät (40) kabelgebunden oder kabellos mit der Datenverarbeitungsanlage verbunden ist.

2. Vorrichtung (1) nach Anspruch 1, **dadurch gekennzeichnet, dass** das Wasservorkommen (10) ein Wasserbecken (11), ein See, ein Meer oder ein Fluss ist.

3. Vorrichtung (1) nach Anspruch 1 oder 2, **dadurch gekennzeichnet, dass** der Strömungserzeuger (20) eine Pumpe, eine Turbine, eine Seilwinde und/oder ein Wasserfahrzeug, insbesondere ein Unterwasserfahrzeug ist.

4. Vorrichtung (1) nach einem der vorgenannten Ansprüche, **dadurch gekennzeichnet, dass** wenigstens eine Haltevorrichtung (60) in dem Wasservorkommen (10) vorgesehen ist, durch die der mindestens eine Benutzer (2) in einer Position relativ zu dem wenigstens einen Strömungserzeuger (20) gehalten ist.

5. Vorrichtung (1) nach Anspruch 4, **dadurch gekennzeichnet, dass** die Haltevorrichtung (60) mindestens eine Bewegungseinrichtung (65) aufweist, durch die die wenigstens eine Haltevorrichtung (60) relativ zu dem Wasservorkommen (10) beweglich ist.

6. Vorrichtung (1) nach einem der vorgenannten Ansprüche, **dadurch gekennzeichnet, dass** wenigstens ein Eingabegerät (50) für den mindestens einen Benutzer (2) vorgesehen ist, welches mit der Datenverarbeitungsanlage verbunden ist, dass durch das mindestens eine Eingabegerät (50) die Reality Simulation gesteuert ist, und dass das mindestens eine Eingabegerät (50) kabelgebunden oder kabellos mit der Datenverarbeitungsanlage verbunden ist.

7. Vorrichtung (1) nach einem der Ansprüche 4 bis 6, **dadurch gekennzeichnet, dass** die Haltevorrichtung (60) das wenigstens eine Eingabegerät (50), mindestens eine Sensorik, mindestens einen Schwingungserzeuger und/oder den mindestens einen Strömungserzeuger (20) aufweist.

8. Vorrichtung (1) nach einem der vorgenannten Ansprüche, **dadurch gekennzeichnet, dass** der Strömungserzeuger (20) eine Warm- und/oder Kaltwasserzumischung aufweist.

9. Vorrichtung (1) nach einem der vorgenannten Ansprüche, **dadurch gekennzeichnet, dass** mindestens zwei Strömungserzeuger (20) vorgesehen sind, die eine Wasserströmung in unterschiedlichen Strömungsrichtungen und Geschwindigkeiten erzeugen können und/oder dass wenigstens ein Strömungserzeuger (20) eine Strömungsvektorsteuerung aufweist.

10. Vorrichtung (1) nach einem der vorgenannten Ansprüche, **dadurch gekennzeichnet, dass** mindestens eine Schallquelle in dem Wasservorkommen (10) angeordnet ist, und dass durch die Schallquelle in Abhängigkeit von der Virtual Reality Simulation Geräusche wiedergegeben werden.

11. Vorrichtung (1) nach einem der vorgenannten Ansprüche, **dadurch gekennzeichnet, dass** wenigstens ein Luftblasenerzeuger vorgesehen ist, und dass der Luftblasenerzeuger in Abhängigkeit von der Virtual Reality Simulation Luftblasen ausstößt.

12. Vorrichtung (1) nach einem der vorgenannten Ansprüche, **dadurch gekennzeichnet, dass** mindestens eine Positionserfassungseinrichtung vorgesehen ist, die die Position des mindestens einen Benutzers (2) erfasst.

13. Vorrichtung (1) nach einem vorgenannten Ansprüche, **dadurch gekennzeichnet, dass** in dem Wasservorkommen (10) mindestens ein Gegenstand (26) angeordnet ist und/oder dass mindestens eine Zuführungseinrichtung vorgesehen ist, durch die mindestens ein Gegenstand (26) in das Wasservorkommen (10) zugeführt werden kann.

14. Vorrichtung (1) nach Anspruch 13, **dadurch gekennzeichnet, dass** mindestens eine Stelleinheit (27) vorgesehen ist, und dass die mindestens eine Stelleinheit (27) den mindestens einen Gegenstand (26) bewegt.

15. Vorrichtung (1) nach einem der Ansprüche 13 oder 14, **dadurch gekennzeichnet, dass** der mindestens eine Gegenstand (26) Bestandteil der der Virtual Reality Simulation ist.

16. Vorrichtung (1) nach einem der vorgenannten Ansprüche, **dadurch gekennzeichnet, dass** die Datenverarbeitungsanlage eine Vielzahl von Virtual Reality Simulationen erzeugt, die unterschiedliche Erlebnisse beinhaltet.

17. Vorrichtung nach einem der vorgenannten Ansprüche, **dadurch gekennzeichnet, dass** bei einer Mehrzahl von Benutzern (2) jeder Benutzer (2) eine individuelle Virtual Reality Simulation erleben kann.

## Claims

1. Apparatus (1) for at least one user (2) for experiencing at least one virtual reality simulation in an underwater world, comprising:
- at least one water reservoir (10) with at least one current generator (20),
- at least one data processing device, and
- at least one VR display device (40),
- wherein the at least one data processing device generates a virtual reality simulation,
- wherein the at least one current generator (20) and the at least one data processing device for simulating the virtual reality are synchronized and a current, synchronized with the at least one virtual reality simulation, is generated, by means of which simulation-dependent relative movements are generated between the water of the reservoir and the at least one user,
- wherein the virtual reality simulation is reproduced on the VR display device (40), and
- wherein the VR display device (40) is a water-compatible head-mounted display and the at least one VR display device (40) is wired or wireless connected to the data processing device.

2. Apparatus (1) in accordance with claim 1, **characterized in that** the water reservoir (10) is a pool (11), a lake, a sea or a river.

3. Apparatus (1) in accordance with claim 1 or 2, **characterized in that** the current generator (20) is a pump, a turbine, a cable winch and/or a water craft, in particular, an underwater craft.

4. Apparatus (1) in accordance with any of the preceding claims, **characterized in that** at least one holding device (60) is provided in the water reservoir (10), by means of which the at least one user (2) is held in a position relative to the at least one current generator (20).

5. Apparatus (1) in accordance with claim 4, **characterized in that** the holding device (60) comprises at least one movement device (65), by means of which the at least one holding device (60) can be moved relative to the water reservoir (10).

6. Apparatus (1) in accordance with any of the preceding claims, **characterized in that** at least one input device (50) is provided for the at least one user (2) that is connected to the data processing device, **in that** the virtual reality simulation can be controlled by means of the at least one input device (50), and **in that** the at least one input device (50) is wired or wirelessly connected to the data processing device.

7. Apparatus (1) in accordance with any of claims 4 to 6, **characterized in that** the holding device (60) comprises the at least one input device (50), at least one sensor system, at least one oscillation generator and/or the at least one current generator (20).

8. Apparatus (1) in accordance with any of the preceding claims, **characterized in that** the current generator (20) comprises the admixing of warm or cold water.

9. Apparatus (1) in accordance with any of the preceding claims, **characterized in that** at least two current generators (20) are provided that can generate a water current in different directions and at different speeds and/or **in that** at least one current generator (20) comprises a current vector control.

10. Apparatus (1) in accordance with any of the preceding claims, **characterized in that** at least one sound source is disposed in the water reservoir (10) and **in that** sounds are emitted by the sound source in dependency on the virtual reality simulation.

11. Apparatus (1) in accordance with any of the preceding claims, **characterized in that** at least one air bubble generator is provided and **in that** the air bubble generator produces air bubbles in dependency on the virtual reality simulation.

12. Apparatus (1) in accordance with any of the preceding claims, **characterized in that** at least one position detection device is provided that detects the position of the at least one user (2).

13. Apparatus (1) in accordance with any of the preceding claims, **characterized in that** at least one object (26) is disposed in the water reservoir (10) and/or **in that** at least one introduction means is provided through which an object (26) can be introduced into the water reservoir (10).

14. Apparatus (1) in accordance with claim 13, **characterized in that** at least one control unit (27) is provided and **in that** the at least one control unit (27) moves the at least one object (26).

15. Apparatus (1) in accordance with either of claims 13 or 14, **characterized in that** the at least one object (26) is a component of the virtual reality simulation.

16. Apparatus (1) in accordance with any of the preceding claims, **characterized in that** the data processing device generates a multitude of virtual reality simulations that entail different experiences.

17. Apparatus (1) in accordance with any of the preceding claims, **characterized in that**, when numerous users (2) are present, each user (2) can experience an individual virtual reality simulation.

## Revendications

1. Dispositif (1) pour au moins un utilisateur (2), pour vivre au moins une simulation de réalité virtuelle dans le monde sous-marin comprenant :
- au moins un site aquatique (10) avec au moins un générateur de courant (20),
- au moins une installation de traitement de données, et
- au moins un appareil d'affichage de réalité virtuelle (40),
- l'installation de traitement de données générant cette simulation en réalité virtuelle,
- le générateur de courant (20) et l'installation de traitement de données étant synchronisés pour simuler la réalité virtuelle et générant un courant synchronisé sur cette simulation de réalité virtuelle de façon à générer des mouvements relatifs en fonction de la simulation entre l'eau du site aquatique et au moins un utilisateur,
- la simulation de réalité virtuelle étant reproduite sur l'appareil d'affichage de réalité virtuelle (40), et
- l'appareil d'affichage de réalité virtuelle (40) est une paire de lunettes de visualisation et reliée à l'installation de traitement de données par une liaison avec ou sans câble.

2. Dispositif (1) selon la revendication 1,
**caractérisé en ce que**
le site aquatique (10) est un bassin (11), un lac, la mer ou un fleuve.

3. Dispositif (1) selon la revendication 1 ou 2,
**caractérisé en ce que**
le générateur de courant (20) est une pompe, une turbine, un treuil à câble et/ou un engin aquatique notamment un engin sous-marin.

4. Dispositif (1) selon l'une des revendications précédentes,
**caractérisé en ce qu'**il comprend
au moins un dispositif de maintien (60) dans le site aquatique (10) qui tient l'utilisateur (2) dans une position relative par rapport au générateur de courant (20).

5. Dispositif (1) selon la revendication 4,
**caractérisé en ce que**
le dispositif de maintien (60) comporte au moins une installation de mouvement (65) qui fait bouger le dispositif de maintien (60) par rapport au site aquatique (10).

6. Dispositif (1) selon l'une des revendications précédentes,
**caractérisé en ce qu'**il comprend
au moins un appareil d'entrée (50) pour l'utilisateur (2) et relié à l'installation de traitement de données,
- cet appareil d'entrée (50) commandant la simulation de réalité, et
- l'appareil d'entrée (50) étant relié par une liaison par câble ou sans câble à l'installation de traitement de données.

7. Dispositif (1) selon l'une des revendications 4 à 6,
**caractérisé en ce que**
le dispositif de maintien (60) comporte au moins un appareil d'entrée (50), au moins un capteur, au moins un générateur de vibration et/ou au moins un générateur de courant (20).

8. Dispositif (1) selon l'une des revendications précédentes,
**caractérisé en ce que**
le générateur de courant (20) fournit un mélange d'eau chaude et/ou d'eau froide.

9. Dispositif (1) selon l'une des revendications précédentes,
**caractérisé en ce qu'**il comporte
au moins deux générateurs de courant (20) qui génèrent un courant d'eau dans des directions différentes et des vitesses différentes et/ou au moins un générateur de courant (20) présente une commande de vecteur de courant.

10. Dispositif (1) selon l'une des revendications précédentes,
**caractérisé en ce qu'**il comporte
au moins une source sonore dans le site aquatique (10) et émettant des bruits en fonction de la simulation de réalité virtuelle.

11. Dispositif (1) selon l'une des revendications précédentes,
**caractérisé en ce qu'**il comporte
au moins un générateur de bulles d'air qui éjecte des bulles d'air en fonction de la simulation de réalité virtuelle.

12. Dispositif (1) selon l'une des revendications précédentes,
**caractérisé en ce qu'**il comporte
au moins une installation de saisie de position qui saisit la position d'au moins un utilisateur (2).

13. Dispositif (1) selon l'une des revendications précédentes,
**caractérisé en ce qu'**
au moins un objet (26) est installé dans le site aquatique (10) et/ou au moins une installation d'alimentation est prévue qui fournit au moins un objet (26) dans le site aquatique (10).

14. Dispositif (1) selon la revendication 13,
**caractérisé en ce qu'**il comporte
au moins une unité de réglage (27) et cette unité de réglage (27) déplace cet objet (26).

15. Dispositif (1) selon l'une des revendications 13 ou 14,
**caractérisé en ce que**
l'objet (26) fait partie de la simulation de réalité virtuelle.

16. Dispositif (1) selon l'une des revendications précédentes,
**caractérisé en ce que**
l'installation de traitement de données génère un grand nombre de simulations de réalité virtuelle qui correspondent à des événements différents.

17. Dispositif (1) selon l'une des revendications précédentes,
**caractérisé en ce que**
pour un ensemble d'utilisateurs (2), chaque utilisateur (2) vit une simulation individuelle de réalité virtuelle.
